# FASCICULE DE BREVET EUROPEEN

(11) **EP 1 257 696 B1**
(45) Date de publication et mention de la délivrance du brevet: **04.08.2004**
(21) Numéro de dépôt: 01907874.0
(22) Date de dépôt: 22.02.2001
(51) Int. Cl.: C25D 11/34

(54) **PROCEDE DE TRAITEMENT DE SURFACE SUR UN SUBSTRAT EN CUIVRE OU EN ALLIAGE DE CUIVRE ET INSTALLATION DE MISE EN OEUVRE**
VERFAHREN ZUR BEHANDLUNG DER OBERFLÄCHE EINES KUPFER- ODER KUPFERLEGIERUNGSSUBSTRATES UND IMPLEMENTIERUNGSVORRICHTUNG DAFÜR
SURFACE TREATMENT METHOD ON A COPPER OR COPPER ALLOY SUBSTRATE AND INSTALLATION THEREFOR

(30) Priorité: 22.02.2000 FR 0002293
(43) Date de publication de la demande: 20.11.2002
(73) Titulaire: Jacques Giordano Industries S.A., 13685 Aubagne (FR)
(72) Inventeur: BELGHITH, M. Office Méditerranéen de Bre. Inv. Mar, 06000 Nice (FR)
(74) Mandataire: Hautier, Jean-Louis
(86) Numéro de dépôt international: PCT/FR2001/000517
(87) Numéro de publication internationale: WO 2001/063017

(56) Documents cités:
- FR-A- 2 736 363
- US-A- 2 828 250
- US-A- 3 114 683
- US-A- 3 198 672
- US-A- 4 309 257
- US-A- 4 681 814
- PATENT ABSTRACTS OF JAPAN vol. 018, no. 517 (C-1254), 29 septembre 1994 (1994-09-29) & JP 06 173085 A (NISSHIN STEEL CO LTD), 21 juin 1994 (1994-06-21) -& DATABASE WPI Derwent Publications Ltd., London, GB; AN 1994-239320 XP002152257
- DATABASE INSPEC [en ligne] INSTITUTE OF ELECTRICAL ENGINEERS, STEVENAGE, GB; DRUSKA P ET AL: "A surface analytical examination of passive layers on Cu/Ni alloys. I. Alkaline solution" Database accession no. 5318047 XP002153957 & CORROSION SCIENCE, JUNE 1996, ELSEVIER, UK, vol. 38, no. 6, pages 835-851, ISSN: 0010-938X

## Description

La présente invention concerne un procédé de traitement de surface sur un substrat en cuivre ou en alliage de cuivre ainsi qu'une installation apte à mettre en oeuvre ce procédé.

L'invention trouvera particulièrement son application dans le domaine de la conversion photothermique de l'énergie solaire et en particulier s'appliquera à la fabrication de capteurs solaires par réalisation d'un revêtement sélectif.

Dans ce domaine, on connaît du document FR-A-2.736.363 un procédé de traitement de surface d'un substrat en cuivre ou alliage de cuivre, en vue de réaliser un revêtement sélectif pour la conversion photothermique de l'énergie solaire. La surface sélective est obtenue après une succession d'opérations chimiques et électrochimiques consistant essentiellement à décaper préalablement la surface à traiter notamment dans une solution d'acide nitrique, à traiter électrochimiquement par oxydation anodique l'alliage à un potentiel prédéterminé dans une solution basique contenant de la soude et du chlorite de sodium en utilisant un barbotage de gaz inerte, et à effectuer un post-traitement chimique dans un bain contenant un permanganate de métal alcalin.

Selon ce document, on effectue un traitement électrochimique dont les paramètres sont adaptés pour la réalisation d'un revêtement sélectif c'est-à-dire possédant les propriétés nécessaires à l'application souhaitée et en particulier nécessaires à la conversion photothermique de l'énergie solaire.

Le procédé décrit selon cette antériorité atteint des résultats satisfaisants pour un traitement de substrat en cuivre ou en alliage de cuivre de façon discontinue.

Selon FR-A-2.736.363, on plonge successivement le substrat dans des différents bains en vue de réaliser les différentes étapes du traitement.

Cependant, il apparaît que lorsque l'on souhaite, en phase industrielle, traiter un substrat en cuivre ou alliage de cuivre de façon continue, ce procédé atteint ses limites.

En effet, dans la pratique, on constate que ce procédé est inadapté à un traitement en continu.

On entend par traitement en continu le fait de réaliser le traitement de surface par un transfert par défilement du substrat pouvant se présenter sous forme de bobine d'une longueur relativement importante.

On constate que le procédé selon l'art antérieur est d'une faible productivité car ne peut être mis en oeuvre que de façon discontinue.

Par ailleurs, il a l'inconvénient de limiter les dimensions possibles du substrat traité.

En outre, il nécessite des bains de grandes dimensions pour réaliser des capteurs de grandes tailles ce qui est encombrant et coûteux.

La présente invention a pour but de remédier aux inconvénients des procédés actuels et permet un traitement de surface d'un substrat en cuivre ou en alliage de cuivre satisfaisant et applicable à une fabrication en continu.

Un des premiers buts de l'invention est d'ajouter au procédé de traitement de surface connu jusqu'alors une étape de préparation de la surface afin de permettre ensuite un traitement électrochimique par oxydation anodique efficace.

L'invention a l'avantage de permettre aussi bien un traitement en continu qu'un traitement en discontinu du substrat de cuivre ou d'alliage de cuivre.

Par ailleurs, du fait de ses possibilités de travail en continu, elle ne nécessite que des bains de petites dimensions, juxtaposés, ce qui d'une part diminue fortement le coût de fabrication, et d'autre part augmente la productivité et la flexibilité dimensionnelle du substrat et de l'installation, les charges d'entretien et l'encombrement de la ligne de fabrication.

D'autres buts et avantages apparaîtront au cours de la description qui suit qui n'est cependant pas limitative.

La présente invention concerne un procédé de traitement de surface pour un substrat en cuivre ou en alliage de cuivre, comportant une étape de traitement électrochimique par oxydation anodique dans un bain composé d'une solution basique, en vue de réaliser un revêtement sélectif, caractérisé par le fait qu'on effectue un pré-traitement électrochimique, avant l'étape de traitement électrochimique, ledit prétraitement électrochimique étant réalisé par oxydation anodique dans un bain composé d'une solution basique et consistant à :
1° faire défiler le substrat dans le bain, en continu
2° appliquer le potentiel électrique de prétraitement seulement lorsque la surface non traitée du substrat devient plus grande que la surface déjà traitée éventuellement présente dans le bain.

Le procédé selon l'invention pourra se présenter sous les modes de réalisation énoncés ci-après :
- on utilise une solution basique contenant de la soude et du chlorite de sodium pour constituer le bain de traitement et/ou le bain de pré-traitement ;
- on applique un potentiel électrique de pré-traitement de forme carrée ;
- le seuil maximal du potentiel électrique est ajusté entre une valeur correspondant au début du domaine de transpassivité et une valeur correspondant à la limite de passivité secondaire par rapport à une électrode de référence déterminée ;
- on effectue un barbotage de gaz inerte dans le bain de traitement et/ou le bain de prétraitement ;
- on fait défiler le substrat en continu au cours de tous les stades de traitement ;
- on effectue, avant le pré-traitement électrochimique, les étapes suivantes :
   1° dégraissage du substrat
   2° décapage à l'acide dans un bain aqueux.
- on effectue, après le traitement électrochimique, les étapes suivantes :
   1° post-traitement chimique dans un bain contenant un permanganate de métal alcalin
   2° séchage.

L'invention concerne également une installation pour le traitement de surface sur un substrat en cuivre ou en alliage de cuivre comportant des moyens de traitement électrochimique par oxydation anodique, en vue de réaliser un revêtement sélectif, pour la mise en oeuvre du procédé selon l'invention, caractérisée par le fait qu'elle comporte :
- des moyens de stockage du substrat sous forme de bobines, en tête et en fin d'installation,
- des moyens d'entraînement en continu du substrat permettant de le faire défiler par les divers stades de traitement,
- des moyens de prétraitement électrochimique par oxydation anodique dans un bain d'une solution basique, tels que le potentiel électrique de pré-traitement n'est appliqué que lorsque la surface non traitée du substrat présente dans le bain devient plus grande que la surface déjà traitée éventuellement présente dans le bain.

Les dessins ci-joints sont donnés à titre d'exemples indicatifs et non limitatifs. Ils représentent un mode de réalisation préféré selon l'invention. Ils permettront de comprendre aisément l'invention.

La figure 1 est un schéma de défilement dans les bains de pré-traitement et de traitement.

La figure 3 illustre une courbe d'évolution temporelle du potentiel de traitement électrochimique dans le bain de pré-traitement.

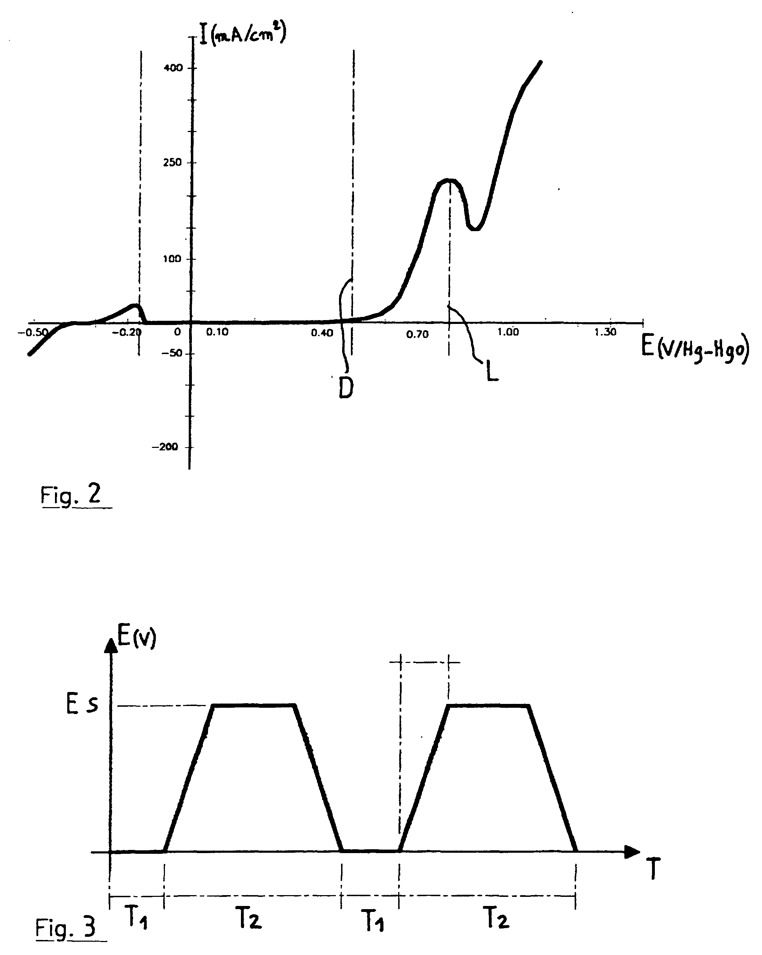

La figure 2 montre une courbe de polarisation du cuivre dans un bain basique de traitement électrochimique.

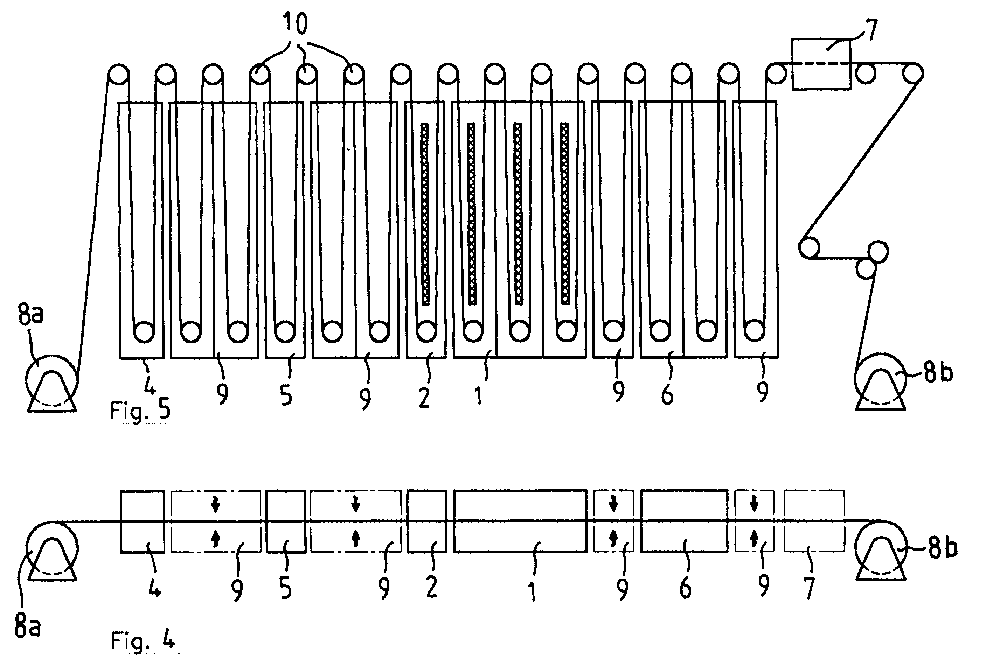

La figure 4 est une vue générale des stades de traitement de surface proposé selon l'invention.

La figure 5 montre un mode particulier de réalisation d'une ligne de traitement de surface que peut comporter l'installation.

Le procédé ici présenté s'applique particulièrement à la formation de surfaces sélectives sur substrat de cuivre ou d'alliage de cuivre (contenant préférentiellement plus de 90 % de cuivre) pour les absorbeurs de capteurs solaires.

On décrit ci-après un mode de réalisation de l'invention entrant dans le cadre de cette application aux capteurs solaires, avec un choix de paramètres effectué pour atteindre les caractéristiques du revêtement sélectif souhaité dans ce cas.

Cet exemple d'application n'est cependant pas limitatif de l'invention.

En ce qui concerne les absorbeurs pour capteurs solaires, l'objectif du traitement de surface est de parvenir à un revêtement sélectif présentant un facteur d'absorption du rayonnement solaire très élevé et un facteur de rayonnement thermique, à la température de fonctionnement, faible.

Particulièrement, un traitement électrochimique par oxydation anodique permet de parvenir à ce revêtement sélectif.

Ce procédé, proposé par le document FR-A-2.736.363, s'avère efficace actuellement pour un traitement en discontinu de tôles de dimensions limitées passant successivement par les divers stades du traitement.

Pour permettre la mise en oeuvre de ce procédé pour un traitement en continu, par lequel une grande longueur de tôle (par exemple déroulée depuis une bobine) est traitée d'un seul tenant, la présente invention propose d'ajouter au procédé décrit par FR-A-2.736.363 une étape préparatoire, dite de pré-traitement électrochimique avant le traitement électrochimique proprement dit dont l'objet est d'ajuster les propriétés du revêtement sélectif.

Il s'avère en effet que l'étape de traitement électrochimique est peu concluante sans un pré-traitement électrochimique : l'oxydation anodique ne permet pas la formation d'une couche stable et homogène sur toute la surface du substrat cuivre ou alliage de cuivre. On n'obtient pas le revêtement sélectif escompté.

Le pré-traitement selon l'invention est réalisé par oxydation anodique dans un bain 2 composé d'une solution basique.

Il pourra s'agir de la même solution basique que pour le traitement électrochimique postérieur telle qu'une solution de soude (par exemple entre 60 et 200 g/l) et de chlorite de sodium (par exemple entre 40 g/l et 140 g/l), à une température de 50°C à 70°C.

Eventuellement, un barbotage d'azote est prévu dans le bain 2 pour décarboniser le bain et augmenter sa durée de vie.

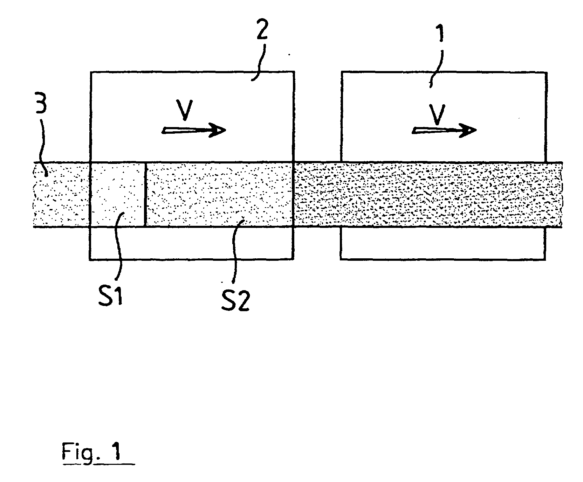

Selon l'invention, le pré-traitement électrochimique s'effectue, au cours du défilement du substrat 3 dans le bain 2, de la façon suivante, en se référant aux figures 1 et 3.
1° Pendant un temps T1, le potentiel électrique de pré-traitement E est nul afin d'introduire une surface S1 de substrat 3 non traitée dans le bain 2.
2° Lorsque, au bout du temps T1, la surface non traitée S1 devient plus importante que la surface S2 traitée présente dans le bain 2, on applique un potentiel électrique E non nul. Cette étape se prolonge durant un temps T2.

Préférentiellement, le défilement du substrat s'effectue à vitesse V constante. De cette façon, on peut ajuster les valeurs de T1 et T2 suivant les paramètres de vitesse V et de dimension du bain 2.

Suivant l'exemple de la figure 3, le potentiel électrique E est un signal carré donc le seuil maximum est repéré ES.

A titre préférentiel, la valeur de ES est choisie dans l'intervalle compris entre le début D du domaine de transpassivité et la limite L de passivité secondaire, par rapport à une électrode de référence déterminée.

La figure 2 montre cet intervalle sur une courbe de polarisation du substrat cuivre ou alliage de cuivre dans le bain de traitement par rapport à une électrode de référence en oxyde mercureux.

Immédiatement après le pré-traitement électrochimique, on procède au traitement électrochimique proprement dit.

Il peut être réalisé dans un bain 1 de même composition chimique que pour le prétraitement et dans les mêmes conditions d'oxydation quant au choix de l'électrode, de la température du bain.

Il s'agira préférentiellement d'un traitement à potentiel constant, par exemple à la même valeur ES.

La figure 4 montre que le procédé comporte de préférence des étapes supplémentaires de dégraissage 4, de décapage 5, de post-traitement 6 et de séchage 7. Un rinçage 9 est recommandé entre ces étapes, sauf entre le prétraitement et le traitement électrochimique.

Cette succession d'étapes peut être réalisée comme suit.

Le substrat 3 est déroulé à la vitesse V.

Un dégraissage 4 de ce substrat est effectué, puis un rinçage 9.

Ensuite, la tôle passe dans le bain de décapage 5 pendant 1 à 2 minutes, en vue d'éliminer la couche passivante formée naturellement à l'air. Le décapage est effectué de façon à obtenir un aspect mat et uniforme ce qui provoque une amélioration des propriétés optiques avant le traitement proprement dit. On constate que le potentiel du substrat mesuré dans le bain basique prend la valeur du potentiel de corrosion naturelle. Il est à noter que, préalablement, le substrat est de préférence soumis à un dégraissage à l'aide d'un solvant organique ou minéral ou en utilisant des agents lessivants. Le bain de décapage 5 peut être une solution aqueuse à 15 à 25 % d'acide nitrique entre 50 et 60°C.

Après un nouveau rinçage, on procède au pré-traitement électrochimique dans le bain 2, suivant les conditions déjà décrites.

Cette première oxydation effectuée, le traitement électrochimique dans le bain 1 peut se produire à potentiel constant et dans des conditions choisies pour atteindre les propriétés souhaitées pour le revêtement sélectif. On pourra choisir une même solution que celle du bain 2 et un potentiel égal à ES. Un barbotage ou non de gaz inerte, tel de l'azote est possible.

Le traitement dans le bain 1 peut se prolonger durant 1 à 30 mn. On ajustera la longueur du bain 1 et la vitesse V de défilement en fonction.

Après un nouveau rinçage 9, un post-traitement 6 peut être réalisé par passage dans une solution à 2 à 3 % en poids de permanganate de métal alcalin et 2 à 3 % en masse de soude, entre 45° et 60°C, durant 2 à 5 minutes.

Après rinçage 9, un séchage 7, notamment à l'air ou dans une étuve entre 50 et 100°C durant 5 à 10 minutes, finalise le traitement.

On atteint un revêtement d'aspect noir, mat, aux propriétés optiques adaptées aux absorbeurs de capteurs solaires. Il est possible de réenrouler la tôle constituant le substrat 3.

Suivant l'exemple, les étapes de rinçage 9 sont effectuées à température ambiante dans de l'eau déminéralisée de conductivité comprise entre 4 et 5 mS/cm.

L'invention a également trait à une installation apte à mettre en oeuvre le procédé.

Une schématisation en est donnée à la figure 5.

Cette installation comprend des moyens de traitement et de prétraitement électrochimiques sous forme des bains 1 et 2 dans lesquels une électrode (par exemple en oxyde mercureux) est plongée et alimentée.

Des bains supplémentaires sont également prévus pour le dégraissage 4, les rinçages 9, le décapage 5 et le post-traitement 6.

Une étuve 7 est aussi présente.

Deux bobines 8a, 8b constituent les moyens de stockage du substrat 3 sous forme de tôle roulée.

Une bobine 8a assure le déroulement en début d'installation. L'autre bobine 8b permet l'enroulement en fin de traitement.

Pour assurer le défilement du substrat 3 au cours de son traitement, des moyens d'entraînement en continu sont formés, notamment sous forme de motorisations électriques des bobines 8a, 8b.

Enfin, des cylindres 10 permettent le guidage et l'orientation du substrat 3 pour le passage au travers des différents bains.

L'installation ainsi formée est compacte.

Les bandes de tôles peuvent ensuite être coupées selon les longueurs souhaitées pour les capteurs d'énergie solaire.

### REFERENCES

- 1.: Bain de traitement électrochimique
- 2.: Bain de pré-traitement électrochimique
- 3.: Substrat
- 4.: Dégraissage
- 5.: Décapage
- 6.: Post-traitement
- 7.: Séchage
- 8. 8a, 8b.: Bobines
- 9.: Rinçage
- 10.: Cylindres d'orientation
- S1.: Surface non traitée
- S2.: Surface traitée
- V.: Vitesse de défilement
- E.: Potentiel électrique de pré-traitement
- ES.: Seuil maximal
- T1.: Temps d'introduction
- T2.: Temps de prétraitement
- D.: Début de transpassivité
- L.: Limite de passivité secondaire

## Revendications

1. Procédé de traitement de surface sur un substrat (3) en cuivre ou en alliage de cuivre, comportant une étape de traitement électrochimique par oxydation anodique dans un bain (1) composé d'une solution basique, en vue de réaliser un revêtement sélectif, **caractérisé par le fait**
**qu'**on effectue un pré-traitement électrochimique, avant l'étape de traitement électrochimique, ledit prétraitement électrochimique étant réalisé par oxydation anodique dans un bain (2) composé d'une solution basique et consistant à :
1° faire défiler le substrat (3) dans le bain (2), en continu
2° appliquer le potentiel électrique (E) de prétraitement seulement lorsque la surface non traitée (S1) du substrat (3) devient plus grande que la surface déjà traitée (S2) éventuellement présente dans le bain (2).

2. Procédé de traitement de surface selon la revendication 1, **caractérisé par le fait**
**qu'**on applique un potentiel électrique (E) de pré-traitement de forme carrée.

3. Procédé de traitement de surface selon la revendication 2 **caractérisé par le fait**
**que** le seuil maximal (ES) du potentiel électrique (E) est ajusté entre une valeur correspondant au début (D) du domaine de transpassivité et une valeur correspondant à la limite (L) de passivité secondaire par rapport à une électrode de référence déterminée.

4. Procédé de traitement de surface selon l'une quelconque des revendications 1 à 3, **caractérisé par le fait**
**qu'**on utilise une solution basique contenant de la soude et du chlorite de sodium pour constituer le bain (1) de traitement et/ou le bain (2) de pré-traitement.

5. Procédé de traitement de surface selon l'une quelconque des revendications 1 à 4, **caractérisé par le fait**
**qu'**on effectue un barbotage de gaz inerte dans le bain de traitement (1) et/ou le bain (2) de prétraitement.

6. Procédé de traitement de surface selon l'une quelconque des revendications 1 à 5, **caractérisé par le fait**
**qu'**on fait défiler le substrat (3) en continu au cours de tous les stades de traitement.

7. Procédé de traitement de surface selon la revendication 6 **caractérisé par le fait que**
- on effectue, avant le pré-traitement électrochimique, les étapes suivantes :
1° dégraissage du substrat (3)
2° décapage à l'acide dans un bain aqueux ;
- on effectue, après le traitement électrochimique, les étapes suivantes :
1° post-traitement chimique dans un bain contenant un permanganate de métal alcalin
2° séchage.

8. Installation pour le traitement de surface sur un substrat (3) en cuivre ou en alliage de cuivre comportant des moyens de traitement électrochimique par oxydation anodique, en vue de réaliser un revêtement sélectif, pour la mise en oeuvre du procédé selon la revendication 6 ou 7, **caractérisée par le fait qu'**elle comporte :
- des moyens de stockage du substrat (3) sous forme de bobines (8a, 8b), en tête et en fin d'installation,
- des moyens d'entraînement en continu du substrat (3) permettant de le faire défiler par les divers stades de traitement,
- des moyens de prétraitement électrochimique par oxydation anodique dans un bain (2) composé d'une solution basique, tels que le potentiel électrique (E) de pré-traitement n'est appliqué que lorsque la surface non traitée (S1) du substrat (3) présente dans le bain (2) devient plus grande que la surface déjà traitée (S2) éventuellement présente dans le bain (2).

## Patentansprüche

1. Oberflächenbehandlungsverfahren für ein Substrat (3) aus Kupfer oder einer Kupferlegierung, bestehend aus einer Phase mit einer elektrochemischen Behandlung durch anodische Oxidation in einem Bad (1) bestehend aus einer basischen Lösung zum Zweck der Herstellung einer selektiven Beschichtung, **gekennzeichnet dadurch, dass**
vor der elektrochemischen Behandlung eine elektrochemische Vorbehandlung durch anodische Oxidation in einem Bad (2) bestehend aus einer basischen Lösung stattfindet, bei der
1' das Substrat (3) das Bad (2) kontinuierlich durchläuft,
2' das elektrische Potential (E) der Vorbehandlung nur dann angelegt wird, wenn die nicht behandelte Oberfläche (S1) des Substrats (3) größer wird als die bereits behandelte Oberfläche (S2), die eventuell im Bad (2) vorhanden ist.

2. Oberflächenbehandlungsverfahren gemäß Anspruch 1, **gekennzeichnet dadurch, dass** ein elektrisches Vorbehandlungs-Potential (E) mit quadratischer Form aufgebracht wird.

3. Oberflächenbehandlungsverfahren gemäß Anspruch 2, **gekennzeichnet dadurch, dass** der maximale Wert (ES) des elektrischen Potentials (E) zwischen einem dem Beginn (D) des Transpassivitätsbereichs und einem der Grenze (L) der sekundären Passivität entsprechenden Wert in Bezug auf eine bestimmte Referenzelektrode eingestellt wird.

4. Oberflächenbehandlungsverfahren nach einem der Ansprüche 1 bis 3, **gekennzeichnet dadurch, dass** zur Herstellung des Behandlungsbades (1) und/oder zur Herstellung des Vorbehandlungsbades (2) eine basische-Lösung mit Zusatz von Natronlauge und Natriumchlorit verwendet wird.

5. Oberflächenbehandlungsverfahren nach einem der Ansprüche 1 bis 4, **gekennzeichnet dadurch, dass** das Behandlungsbad (1) und/oder das Vorbehandlungsbad mit einem Inertgas gespült wird.

6. Oberflächenbehandlungsverfahren nach einem der Ansprüche 1 bis 5, **gekennzeichnet dadurch, dass** das Substrat (3) alle Behandlungsphasen kontinuierlich durchläuft.

7. Oberflächenbehandlungsverfahren nach Anspruch 6, **gekennzeichnet dadurch, dass**
- vor der elektrochemischen Vorbehandlung folgende Arbeitsschritte erfolgen:
1' Entfetten des Substrats (3)
2' Beizen mit Säure in einer wässerigen Lösung
- nach der elektrochemischen Behandlung folgende Arbeitsschritte erfolgen:
1' chemische Nachbehandlung in einem alkalischen Metall-Permanganat-Bad,
2' Trocknung.

8. Anlage zur Oberflächenbehandlung für ein Substrat (3) aus Kupfer oder einer Kupferlegierung, mit Mitteln zur elektrochemischen Behandlung durch anodische Oxidation zum Zweck der Herstellung einer selektiven Beschichtung unter Einsatz des Verfahrens gemäß Anspruch 6 oder 7, **gekennzeichnet dadurch, dass** sie folgende Einrichtungen besitzt:
- Speicher für das Substrat (3) in Form von Spulen (8a, 8b) am Anfang und am Ende der Anlage,
- Antriebselemente, damit das Substrat (3) die verschiedenen Behandlungsphasen kontinuierlich durchlaufen kann,
- Mittel zur elektrochemischen Vorbehandlung durch anodische Oxidation in einem Bad (2), bestehend aus einer basischen Lösung, derart dass das elektrische Potential (E) für die Vorbehandlung nur angelegt wird, wenn die im Bad (2) vorhandene nicht behandelte Oberfläche (S1) des Substrats (3) größer wird als die eventuell im Bad (2) vorhandene, bereits behandelte Oberfläche (S2).

## Claims

1. Process of surface treatment of a substrate (3) in copper or copper alloy, comprising a stage of electrochemical treatment by anodic oxidation in a bath (1) of a basic solution, with a view to forming a selective coating, **characterized in that**
before the electrochemical treatment, an electrochemical pre-treatment is carried out by anodic oxidation in a bath (2) of a basic solution which consists in:
1° running the substrate (3) through the bath (2) continuously
2° applying pre-treatment electric potential (E) only when untreated surface (S1) of substrate (3) becomes larger than the surface already treated (S2) that may be present in bath (2).

2. Process of surface treatment according to claim 1, **characterized in that**
a pre-treatment electric potential (E) of square form is applied.

3. Process of surface treatment according to claim 2 **characterized in that**
maximum threshold (ES) of electric potential (E) is adjusted between a value corresponding to the beginning (D) of the field of transpassivity and a value corresponding to limit (L) of secondary passivity relative to an electrode of given reference.

4. Process of surface treatment according to any of claims 1 to 3, **characterized in that**
a basic solution containing caustic soda and sodium chlorite constitutes treatment bath (1) and/or pre-treatment bath (2).

5. Process of surface treatment according to any of claims 1 to 4, **characterized in that**
inert gas bubbling takes place in treatment bath (1) and/or pre-treatment bath (2).

6. Process of surface treatment according to any of claims 1 to 5, **characterized in that**
substrate (3) is run through continuously during all the treatment stages.

7. Process of surface treatment according to claim 6 **characterized in that**
- the following stages take place before the electrochemical pre-treatment:
1° substrate degreasing (3)
2° acid stripping in a water bath;
- the following stages take place after electrochemical treatment:
1° chemical post-treatment in a bath containing an alkaline metal permanganate
2° drying.

8. Installation for surface treatment on a copper or copper alloy substrate (3) comprising the means for electrochemical treatment by anodic oxidation so as to apply a selective coating, for the implementation of the process according to claim 6 or 7, **characterized in that** it includes:
- means for storing the substrate (3) in the form of reels (8a, 8b) at the head and at the end of the installation,
- means for constant movement of the substrate (3) allowing it to run through the various stages of treatment,
- means for electrochemical pre-treatment by anodic oxidation in a bath (2) consisting of a basic solution, so that the pre-treatment electric potential (E) is applied only when untreated surface (S1) of substrate (3) present in bath (2) becomes larger than the surface already treated (S2) that may be present in bath (2).
